# EUROPÄISCHE PATENTSCHRIFT

(11) **EP 3 463 973 B1**
(45) Veröffentlichungstag und Bekanntmachung des Hinweises auf die Patenterteilung: **04.03.2020**
(21) Anmeldenummer: 17730390.6
(22) Anmeldetag: 23.05.2017
(51) Int. Cl.: B60N 2/58

(54) **FAHRZEUGSITZEINRICHTUNG FÜR EIN KRAFTFAHRZEUG**
VEHICLE SEAT DEVICE FOR A MOTOR VEHICLE
ENSEMBLE SIÈGE POUR UN VÉHICULE AUTOMOBILE

(30) Priorität: 24.05.2016 DE 102016209009
(43) Veröffentlichungstag der Anmeldung: 10.04.2019
(73) Patentinhaber: Volkswagen Aktiengesellschaft, 38440 Wolfsburg (DE)
(72) Erfinder: KRATEL, Ingo, 49163 Bohmte (DE); LINDHORST, Volker, 38104 Braunschweig (DE); ERBER, Hans, 51399 Burscheid (DE); WITZKE, Tobias, 17091 Gross Teetzleben (DE)
(86) Internationale Anmeldenummer: PCT/EP2017/062412
(87) Internationale Veröffentlichungsnummer: WO 2017/202844

(56) Entgegenhaltungen:
- DE-A1-102006 019 740
- US-A1- 2009 295 215

## Beschreibung

Die Erfindung betrifft eine Fahrzeugsitzeinrichtung für ein Kraftfahrzeug, mit einem Sitzpolster und mit einer auf dem Sitzpolster angeordneten Bezugsanordnung, die eine Schaumstoffschicht, einen auf einer ersten Seite der Schaumstoffschicht angeordneten und durch zumindest eine Naht an der Schaumstoffschicht befestigten Sichtbezug und zumindest ein an einer zweiten Seite der Schaumstoffschicht befestigtes Einzugsband aufweist, das in eine Vertiefung des Sitzpolsters eingezogen ist, um die Bezugsanordnung an dem Sitzpolster und/oder an einer das Sitzpolster tragenden Fahrzeugsitzkomponente zu befestigen.

Fahrzeugsitzeinrichtungen der eingangs genannten Art sind aus dem Stand der Technik bereits bekannt. So offenbart die Offenlegungsschrift DE 10 2015 214 557 A1 eine Fahrzeugsitzeinrichtung, bei welcher die Bezugsanordnung auf einem Sitzpolster mittels eines Einzugsbands gehalten ist, welches in einer Vertiefung des Sitzpolsters einliegt und dort formschlüssig gehalten ist. Mittels des Einzugsbands ist ein einfaches Arretieren der Bezugsanordnung auf dem Sitzpolster möglich, wobei sowohl die Herstellung als auch die Montage einfach durchführbar sind. Dabei ist bisher vorgesehen, dass das Einzugsband direkt an der Bezugsanordnung vernäht ist. Dies hat den Nachteil, dass enge Fertigungstoleranzen einzuhalten sind, damit sich beispielsweise bei der Anordnung der Bezugsanordnung auf dem Sitzpolster und der Befestigung mittels des Einzugsbands keine unerwünschten Einwölbungen an der Außenseite des Sichtbezugs ergeben.

Ferner wird in der DE 10 2006 019 740 A1 eine Bezugsabheftung für einen Fahrzeugsitz mit einem Sitzpolster und mit einer auf dem Sitzpolster angeordneten Bezugsanordnung beschrieben, die eine Schaumstoffschicht, ein auf einer ersten Seite der Schaumstoffschicht angeordneten und durch mindestens eine Naht an der Schaumstoffschicht befestigten Sitzbezug und zumindest ein an einer zweiten Seite der Schaumstoffschicht befestigtes Einzugsband aufweist, welches in eine Vertiefung des Sitzpolsters eingezogen ist, um die Bezugsanordnung an dem Sitzpolster zu befestigen.

Der Erfindung liegt daher die Aufgabe zugrunde, eine verbesserte Fahrzugsitzeinrichtung zu schaffen, bei welcher die Montage und Herstellung durch größere zulässige Fertigungstoleranzen erleichtert wird.

Die der Erfindung zugrundeliegende Aufgabe wird durch eine Fahrzeugsitzeinrichtung mit den Merkmalen des Anspruchs 1 gelöst. Diese hat den Vorteil, dass aufgrund eines zusätzlichen Zwischenelements die Anforderungen an die Fertigungstoleranzen verringert werden. Dadurch ist die Montage und auch die Herstellung der Fahrzeugsitzeinrichtung vereinfacht und in Bezug auf die Herstellungskosten verbessert. Erfindungsgemäß wird dies dadurch erreicht, dass an der zweiten Seite der Schaumstoffschicht zumindest ein insbesondere flexibles Halteband angeordnet und durch die zumindest eine Naht an mehreren voneinander beabstandeten Befestigungsstellen an der Bezugsanordnung befestigt ist, und dass das Einzugsband an dem Halteband befestigt ist. Das Halteband ist somit durch die Naht, welche auch den Sichtbezug an der Schaumstoffschicht hält, an der Schaumstoffschicht befestigt. Dabei ist das Halteband nicht in seiner Längserstreckung, sondern an mehreren voneinander beabstandeten Befestigungsstellen an der Bezugsanordnung durch die Naht gehalten, sodass sich zwischen den benachbarten Befestigungsstellen Abschnitte des flexiblen Haltebands ergeben, die nicht fest an der Schaumstoffschicht anliegen, sondern vielmehr lose zwischen den Befestigungsstellen geführt sind. Das Einzugsband ist an dem Halteband zwischen diesen Befestigungsstellen befestigt, sodass es an den losen Abschnitten des Haltebands gehalten ist. Dadurch ergibt sich eine Flexibilität für das Einzugsband, welche gewährleistet, dass bei der Montage und auch bei der Benutzung der Fahrzeugsitzeinrichtung keine unerwünschten Einwölbungen oder Verwürfe an dem Sichtbezug der Bezugsanordnung entstehen. Das Halteband ist insbesondere flexibel ausgebildet und beispielsweise eine Textilie. Bevorzugt ist das Halteband elastisch verformbar ausgebildet, insbesondere aus einem elastisch verformbaren Material gefertigt. Auch ist es denkbar, ein zumindest im Wesentlichen steifes Halteband zu verwenden.

Gemäß einer bevorzugten Weiterbildung der Erfindung ist vorgesehen, dass sich das Halteband über die gesamte Breite oder nahezu die gesamte Breite zumindest einer Sitzfläche des Sichtbezugs geradlinig erstreckt. Damit ist sichergestellt, dass über die gesamte Breite der Sitzfläche oder des Sichtbezugs eine Haltekraft auf den Sichtbezug ausgeübt werden kann. Zweckmäßigerweise ist das Einzugsband über die gesamte Länge des Haltebands jeweils zwischen den Befestigungsstellen an diesem befestigt, sodass eine gleichmäßige Beaufschlagung des Haltebands mit einer Haltekraft in Längserstreckung erfolgt.

Weiterhin ist bevorzugt vorgesehen, dass das Einzugsband in Richtung des Sitzpolsters auf Zug vorgespannt oder vorspannbar ist. Hierdurch wird erreicht, dass eine Zugkraft auf die Bezugsanordnung durch das Halteband ausgeübt wird, welche die Bezugsanordnung in Richtung des Sitzpolsters beziehungsweise gegen das Sitzpolster zieht, sodass die sichere Anlage der Bezugsanordnung an dem Sitzpolster in vorteilhafter Weise sichergestellt ist. Insbesondere ist dabei vorgesehen, dass das Einzugsband derart auf Zug vorgespannt ist, dass die Bezugsanordnung ohne eine durch die Zugkraft bewirkte Einwölbung in Richtung des Sitzpolsters an diesem gehalten ist, sodass sich die Kontur beziehungsweise das Profil der Bezugsanordnung allein durch die Naht und nicht durch eine durch die Befestigung der Bezugsanordnung begründete Einwölbung an der Sichtseite der Bezugsanordnung ergibt. Gemäß einer alternativen Ausführungsform ist jedoch vorgesehen, dass das Einzugsband derart weit in die Vertiefung des Sitzpolsters eingezogen ist, dass eine Einwölbung in dem Sichtbezug in Richtung der Schaumstoffschicht entsteht. Weil sich das Halteband und das Einzugsband über die gesamte Bereite oder nahezu die gesamte Breite zumindest der Sitzfläche des Sichtbezugs geradlinig erstreckt, ergibt sich dadurch eine geradlinige Einwölbung an dem Sichtbezug. Diese Einwölbung führt zu einer zusätzlichen Profilierung der Sichtseite des Sichtbezugs, die zusätzlich zu der durch die Naht erstellte Profilierung vorhanden ist. Dabei ist für die Einwölbung keine zusätzliche Naht in Längserstreckung der Einwölbung notwendig, sodass sich ein optisch ansprechendes Bild auf der Sichtseite des Sichtbezugs ergibt. Durch eine entsprechende Platzierung des Haltebands an der Schaumstoffschicht wird somit gezielt eine geradlinige Einwölbung an dem Sichtbezug erreicht, der zum einen optische Vorteile bietet und zum anderen bei einer entsprechenden Platzierung auch den Sitzkomfort für einen Benutzer erhöhen kann.

Gemäß einer bevorzugten Weiterbildung der Erfindung ist vorgesehen, dass die Naht eine Rautennaht oder eine Karonaht ist. Die Naht erstreckt sich somit rautenförmig oder karoförmig über die Bezugsanordnung, sodass durch die Rautennaht automatisch mehrere Befestigungsstellen für das Halteband gewährleistet sind. Die Rautennaht führt zu einem hohen Sitzkomfort und einem ansprechenden optischen Eindruck. Bevorzugt ist die Naht, insbesondere die Rautennaht oder Karonaht, derart hergestellt, dass der Sitzbezug entlang der Naht in die Schaumstoffschicht eingewölbt beziehungsweise eingezogen ist, wobei die Tiefe der dadurch gebildeten Einwölbung niedriger ist als die Tiefe der durch das Halteband und das Einzugsband erzeugten Einwölbung, sodass sich die Einwölbungen voneinander unterscheiden, was insbesondere den optische Eindruck der geradlinigen zusätzliche Einwölbung entlang des Haltebands verstärkt. Die Rautennaht oder die Karonaht ist zweckmäßigerweise derart ausgebildet, dass der Nahtverlauf weder quer noch senkrecht über die Sitzfläche verläuft, sondern in einem Winkel von beispielsweise 45° dazu, während die vorteilhafte Einwölbung beziehungsweise das Halteband, wie zuvor bereits erwähnt, sich bevorzugt über die gesamte Breite geradlinig erstrecken, sodass sie quer auf dem Fahrzeugsitz ausgerichtet beziehungsweise quer zur Längsrichtung des Fahrzeugsitzes ausgerichtet sind. Dadurch kreuzt die Einwölbung die Rautennaht an mehreren Stellen, ohne die Symmetrie der Rautennaht zu beeinträchtigen. Das Halteband ist insofern nicht parallel zu dem Verlauf der zumindest einen Naht ausgerichtet, sondern vielmehr schräg oder senkrecht dazu, sodass sich die losen Abschnitte des Haltebands zwischen den Befestigungsstellen ergeben. Die Rautennaht unterscheidet sich dabei von der Karonaht dadurch, dass bei der Karonaht die Nahtlinien senkrecht zueinander ausgerichtet sind und sich insofern senkrecht kreuzen, während bei der Rautennaht die Nahtlinien in einem Winkel größer oder kleiner 90° zueinander verlaufen, sodass sich zwischen den Nahtlinien stumpfe oder spitze Winkel ergeben.

Gemäß einer bevorzugten Weiterbildung der Erfindung ist vorgesehen, dass das Halteband gummielastisch ausgebildet ist. Durch die gummielastische Ausbildung ergibt sich der Vorteil, dass das Halteband zwischen den Befestigungsstellen federnd wirkt, wodurch eine vorteilhafte Vorspannkraft mittels des Einzugsbands hergestellt wird, durch welche die Bezugsanordnung vorteilhaft an dem Sitzpolster gehalten ist und auch bei Benutzung des Fahrzeugsitzes eine vorteilhafte Verformung der Bezugsanordnung sowie des Einzugsbands und des Sitzpolsters erlaubt. Aufgrund der Elastizität wird dabei gewährleistet, dass die Kontur der Einwölbung jederzeit erhalten bleibt, oder spätestens nachdem eine Person den Fahrzeugsitz verlassen hat, wieder hergestellt wird.

Weiterhin ist bevorzugt vorgesehen, dass das Einzugsband mehrere Halteschlaufen aufweist, die jeweils um das Halteband zwischen zwei benachbarten Befestigungsstellen zur Befestigung des Einzugsbands an dem Halteband geschlungen sind. Das Einzugsband ist somit nicht einfach an dem Halteband vernäht, verklebt oder dergleichen, sondern umschlingt dieses mit mehreren Halteschlaufen, sodass das Einzugsband letztendlich formschlüssig an dem Halteband befestigt ist. Die Halteschlaufen sind dabei um das Halteband in den Bereichen zwischen den Befestigungsstellen geschlungen, in welchen den Halteband lose an Schaumstoffschicht liegt. Durch das formschlüssige Umschlingen wird eine besonders vorteilhafte Krafteinleitung von dem Einzugsband auf das Halteband gewährleistet, die insbesondere eine gleichmäßige Kraftverteilung ermöglicht, die zu einer gleichmäßig über den Sichtbezug verlaufenden Einwölbung führt. Die Halteschlaufen sind vorzugsweise streifenförmig mit einer konstanten Streifenbreite ausgebildet. Alternativ weisen die Halteschlaufen bevorzugt an zumindest einem Ende eine Breitenvergrößerung auf, die zwischen Halteband und Schaumstoffschicht hindurchführbar ist und zum Schließen der Schlaufe beziehungsweise der Umschlingung an dem Einzugsband oder an einem anderen Abschnitt der Halteschlaufe selbst befestigbar ist.

Gemäß einer bevorzugten Weiterbildung der Erfindung ist vorgesehen, dass die Halteschlaufen an einem ersten Ende jeweils einstückig mit dem Einzugsband ausgebildet sind und an einem zweiten Ende an dem Einzugsband oder an der jeweiligen Halteschlaufe festgemacht, insbesondere festgenäht sind. Die Halteschlaufen sind somit einstückig mit dem Einzugsband oder an sich selbst ausgebildet und an ihrem freien zweiten Ende an dem Einzugsband nach Umschlingen des Haltebands festgemacht. Dadurch ergibt sich der Vorteil einer besonders sicheren formschlüssigen Verbindung von Einzugsband und Halteband. Das freie zweite Ende der Halteschlaufen ist vorzugsweise am Ursprung der jeweiligen Halteschlaufe festgemacht oder an dem sich in Längsrichtung durchgehend erstreckenden Basisabschnitt des Einzugsbands, von welchem die Halteschlaufen ausgehen. Insbesondere wird durch das Vernähen der Halteschlaufen an dem Einzugsband eine sichere Arretierung des Einzugsbands an dem Halteband gewährleistet. Alternativ können die freien Enden der Halteschlaufen auch an dem Einzugsband verschweist, verklebt, oder verklemmt gehalten sein.

Gemäß einer bevorzugten Ausführungsform der Erfindung ist vorgesehen, dass die Halteschlaufen an ihrem zweiten beziehungsweise freien Ende T-förmig ausgebildet sind. Damit weisen die Halteschlaufen an ihrem freien beziehungsweise zweiten Ende eine vergrößerte Breite auf, die dazu führt, dass die Halteschlaufen vorteilhaft an dem Einzugsband mit ihren freien Enden befestigt werden können. Durch die vergrößerte Breite der zweiten Enden steht mehr Fläche zur Befestigung der freien Enden an dem Einzugsband beziehungsweise an den Halteschlaufen zur Verfügung, sodass ein besonders sicherer Halt gewährleistet ist.

Gemäß einer vorteilhaften Weiterbildung der Erfindung ist vorgesehen, dass die Halteschlaufen an dem ersten Ende jeweils einstückig mit dem Einzugsband, wie bereits beschrieben, ausgebildet sind, und an ihrem zweiten Ende an dem Sitzpolster oder der Fahrzeugsitzkomponente befestigt sind. Hierdurch ergibt sich der Vorteil, dass das Einzugsband an zwei unterschiedlichen Befestigungsstellen an dem Sitzpolster und/oder der Fahrzeugsitzkomponente befestigt wird, wodurch ein vorteilhaftes Vorspannungsverhalten des Einzugsbands herstellbar ist. So ist bevorzugt vorgesehen, dass das Einzugsband an seinem von dem Halteband abgewandten Ende an dem Sitzpolster und die Halteschlaufen an ihrem von dem Halteband abgewandten Ende jeweils an der oder einer Fahrzeugsitzkomponente befestigt sind. Hierdurch ergibt sich ein besonders sicherer und vorteilhafter Halt der Bezugsanordnung an dem Sitzpolster.

Bevorzugt ist vorgesehen, dass das Einzugsband an seinem von dem Halteband abgewandten Ende an einer Fahrzeugsitzkomponente oder an dem Sitzpolster befestigt ist. Dadurch, dass das Einzugsband an dem Sitzpolster selbst oder an einer insbesondere das Sitzpolster tragenden Fahrzeugsitzkomponente befestigt ist, ergibt sich eine einfache integrale Ausbildung und Befestigung der Bezugsanordnung an dem Sitzpolster, die die Montage und Konstruktion erleichtert. Durch die bereits genannte und bevorzugte Vorspannung wird der Vorteil erreicht, dass die Bezugsanordnung stets fest an dem Sitzpolster anliegt und insbesondere die genannte Einwölbung durch das Einzugsband dauerhaft gewährleistet ist. Weiterhin hat die Vorspannung den Vorteil, dass die Befestigung des Einzugsbands an der Fahrzeugsitzkomponente oder an dem Sitzpolster auch durch ein einfaches formschlüssiges Hintergreifen eines Hintergriffsitzes erreicht werden kann, ohne dass ein Zustand bei der Benutzung des Fahrzeugsitzes beziehungsweise der Fahrzeugsitzeinrichtung entstehen kann, bei welchem das Einzugsband erschlafft und sich dadurch von dem Hintergriffsitz lösen könnte. Die formschlüssige Befestigung hat den Vorteil einer einfachen Montage und Herstellung.

Weiterhin ist bevorzugt vorgesehen, dass das Einzugsband an seinem von dem Halteband abgewandten Ende zumindest einem im Vergleich zum Einzugsband vergrößertes Halteelement zur insbesondere formschlüssigen Befestigung an der Fahrzeugsitzkomponente oder an dem Sitzpolster aufweist. Mittels des Halteelements ist somit das Einzugsband an dem Sitzpolster oder an der Fahrzeugsitzkomponente befestigbar. Weil das Halteelement im Vergleich zum Einzugsband vergrößert ausgebildet ist, insbesondere in Bezug auf die Breite im Querschnitt gesehen, ist das Halteelement insbesondere für die formschlüssige Befestigung vorteilhaft nutzbar. Bevorzugt ist das Halteelement dazu ausgebildet, die Fahrzeugsitzkomponente oder das Sitzpolster bereichsweise zu hintergreifen, um insbesondere in Zusammenwirkung mit der Zugvorspannung eine sichere Arretierung der Bezugsanordnung an dem Sitzpolster zu gewährleisten. Vorzugsweise ist das Halteelement im Vergleich zu dem Einzugsband steifer oder starr ausgebildet, um den Formschluss zu garantieren. Zweckmäßigerweise weist das Sitzpolster eine Aussparung auf, durch welche das Halteelement mit dem Einzugsband hindurchgeführt ist, um das Sitzpolster zu hintergreifen oder mit der darunterliegenden Fahrzeugsitzkomponente zusammenzuwirken.

Im Folgenden soll die Erfindung anhand der Zeichnung näher erläutert werden. Dazu zeigen
- Figur 1: eine Fahrzeugsitzeinrichtung in einer vereinfachten perspektivischen Darstellung,
- Figur 2: eine vereinfachte Längsschnittdarstellung der Fahrzeugsitzeinrichtung,
- Figur 3: eine Bezugsanordnung der Fahrzeugsitzeinrichtung in einer vereinfachten Draufsicht,
- Figur 4: ein Einzugsband in einer vereinfachten Draufsicht,
- Figur 5: die Bezugsanordnung in einer weiteren Draufsicht mit daran angeordneten Einzugsbändern und
- Figur 6: eine vereinfachte Längsschnittdarstellung der Fahrzeugsitzeinrichtung gemäß einem weiteren Ausführungsbeispiel.

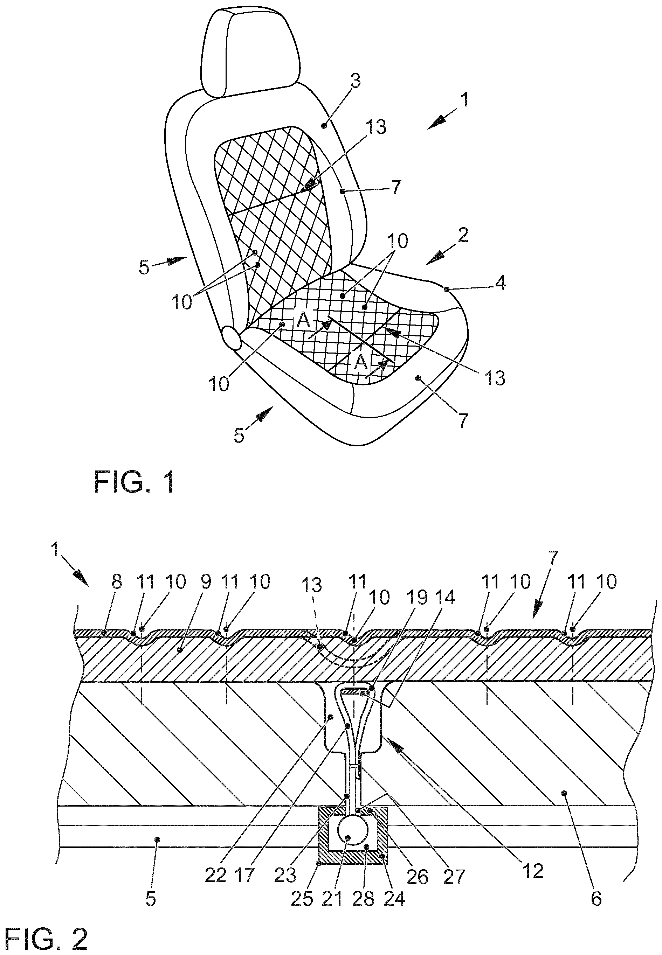

Figur 1 zeigt in einer perspektivischen Darstellung eine Fahrzeugsitzeinrichtung 1 für ein Kraftfahrzeug, die einen Fahrzeugsitz 2 mit einer Rückenlehne 3 und einem Sitzteil 4 aufweist. die Rückenlehne 3 und das Sitzteil 4 werden durch jeweils ein Gestell 5 (Figur 1 nicht ersichtlich) gestützt und weisen ein Sitzpolster 6 auf, auf welchem eine Bezugsanordnung 7 angeordnet ist. Dabei sind sowohl Sitzteil 4 als auch Rückenlehne 3 mit einer entsprechenden Anordnung aus Sitzpolster 6 und Bezugsanordnung 7 ausgebildet.

Figur 2 zeigt eine Längsschnittdarstellung durch das Sitzteil 4 entlang der Linie A-A, anhand dessen die Fahrzeugsitzeinrichtung 1 näher erörtert werden soll. Das Sitzpolster 6 ist aus einem elastisch verformbaren, insbesondere komprimierbaren Werkstoff gebildet, welcher im Wesentlichen für den Sitzkomfort eines Benutzers dient. Auf der dem Benutzer zugewandten Oberseite ist das Sitzpolster 6 von der Bezugsanordnung 7 überzogen. Die Bezugsanordnung 7 weist einen Sichtbezug 8 auf, der aus einem möglichst verschleißfreien und belastbaren flexiblen Material gefertigt ist, wie beispielsweise Leder, und eine Schaumstoffschicht 9, auf welcher der Sichtbezug 8 aufgezogen ist. Der Sichtbezug 8 ist an der Schaumstoffschicht 9 durch mehrere Nähte 10 gehalten, die in Figur 2 durch gestrichelte Linien angedeutet sind. Die Nähte 10 sind dabei derart ausgebildet und ausgerichtet, dass sie zu einem Rautenmuster auf der sichtbaren Oberseite des Sichtbezugs 8 führen, wie in Figur 1 gezeigt. Es ergibt sich somit insgesamt eine Rautennaht, durch welche der Sichtbezug 8 an der Schaumstoffschicht 9 gehalten ist. Die Nähte 10 sind dabei derart ausgebildet, dass sie die Schaumstoffschicht und den Sichtbezug 8 zusammenziehen, sodass im Bereich der jeweiligen Naht 10 an der Oberseite des Sichtbezugs 8 Einwölbungen 11 entstehen, durch welche der jeweilige Sichtbezug 8 von dem Sitzteil 4 und der Rückenlehne 3 eine Rautenprofilierung erhalten, wie in Figur 1 gezeigt.

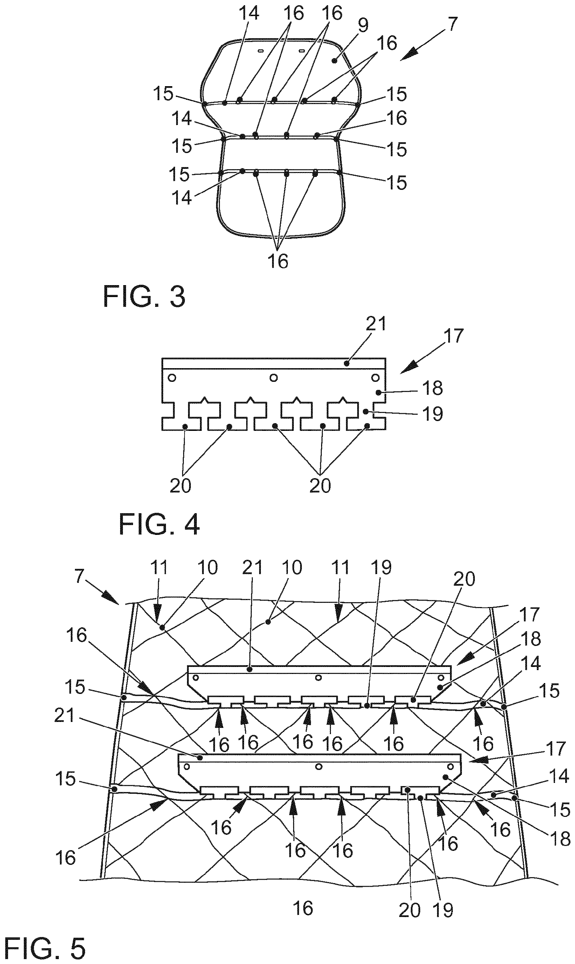

Die Bezugsanordnung 7 ist außerdem durch eine Befestigungseinrichtung 12 an dem Sitzpolster 6 derart gehalten, dass die Bezugsanordnung 7 fest auf dem Sitzpolster 6 aufliegt und insbesondere bei einer Benutzung sich nicht relativ zu diesem verschiebt oder sich von diesem löst. Gemäß dem vorliegenden Ausführungsbeispiel ist vorgesehen, dass die Bezugsanordnung 7 durch die Befestigungseinrichtung 12 derart an dem Sitzpolster 6 gehalten ist, dass sich das Oberflächenprofil der Bezugsanordnung, das sich durch die Nähte 10 und die Einwölbungen 11, wie oben stehend beschrieben, ergibt, durch die Befestigung an dem Sitzpolster 6 nicht verändert beziehungsweise beeinträchtigt wird. Gemäß einem alternativen Ausführungsbeispiel, das in Figur 2 durch gestrichelte Linien angedeutet ist, wird die Bezugsanordnung 7 durch die Befestigungseinrichtung 12 derart an dem Sitzpolster 6 gehalten, dass sich an dem Sichtbezug 8 eine Einwölbung 13 ergibt, die vorzugsweise tiefer ist als die Einwölbungen 11, sodass sie sich optisch von den Einwölbungen 11 unterscheidet. Die Befestigungseinrichtung 12 wird im Folgenden anhand der Figuren 3, 4 und 5 näher erläutert.

Figur 3 zeigt dabei eine Draufsicht auf die Bezugsanordnung 7 auf der dem Sitzpolster 6 zugewandten Unterseite. Dargestellt ist dabei ein erster Fertigungsschritt, bei welchem der Sichtbezug 8 und die Schaumstoffschicht 9 aufeinander liegen, wobei in Figur 3 die dem Sitzpolster 6 zugewandte Unterseite der Schaumstoffschicht zu sehen ist. Quer zur Sitzlängserstreckung sind gemäß dem vorliegenden Ausführungsbeispiel drei Haltebänder 14 angeordnet, die sich über die gesamte Breite der Bezugsanordnung 7 parallel zueinander geradlinig erstrecken. Die Haltebänder 14 sind vorliegend gummielastisch ausgebildet und werden beispielsweise anhand von Stanzlöchern, die durch die Bezugsanordnung 7 hindurchführen, ausgerichtet.

Anschließend werden die Haltebänder 14 an ihren freien Enden am Rand der Bezugsanordnung 7 durch jeweils eine Naht 15 festgemacht, sodass sie im darauffolgenden Fertigungsschritt an der Bezugsanordnung 7 bereits vormontiert sind.

Anschließend wird die Rautennaht mit den Nähten 10 erstellt, wobei die Nähte 10 der Rautennaht abweichend zur Längsrichtung beziehungsweise Querrichtung der Bezugsanordnung 7 verlaufen, sodass keine der Nähte 10 parallel zu den Haltebändern 14 ausgerichtet ist. Infolgedessen kreuzen die Nähte 10 die Haltebänder 14 an mehreren Befestigungsstellen 16, die in Längserstreckung des jeweiligen Haltebandes 14 beabstandet zueinander liegen, sodass zwischen den Befestigungsstellen 16 liegende Abschnitte des jeweiligen Haltebands 14 lose in Bezug auf die Bezugsanordnung 7 sind.

Figur 4 zeigt in einer Draufsicht ein Einzugsband 17, welches an einem der Haltebänder 14 einerseits und an einer Fahrzeugsitzkomponente andererseits befestigt wird, um die Bezugsanordnung 7 an dem Sitzpolster 6 zu halten, um insbesondere die beschriebene Einwölbung 13 herzustellen. Das Einzugsband 17 weist einen in Längserstreckung durchgehenden Basisabschnitt 18 auf, von dem sich mehrere Halteschlaufen 19 parallel zueinander erstrecken, die jeweils ein freies Ende 20 aufweisen, das T-förmig ausgebildet und somit verbreitert ist. Die Halteschlaufen 19 sind dabei alle gleich ausgebildet und an ihrem dem freien Ende 20 gegenüberliegenden Ende einstückig mit dem Basisabschnitt 18 ausgebildet. An der den Halteschlaufen 19 abgewandten Seite weist das Einzugsband 17 ein Halteelement 21 auf, das sich gemäß dem vorliegenden Ausführungsbeispiel über die gesamte Länge des Einzugsbands 17 erstreckt. Alternativ könnten auch mehrere in Längserstreckung beabstandet zueinander angeordnete Halteelemente 21 vorgesehen sein. Das jeweilige Halteelement 21 ist im Querschnitt gesehen breiter ausgebildet als der Basisabschnitt 18 und die Halteschlaufen 19, wie in Figur 2 ersichtlich.

Die Halteschlaufen 19 sind dabei derart beabstandet zueinander angeordnet, dass zwischen ihnen jeweils eine der Befestigungsstellen 16 anordenbar ist. Zur Montage des Einzugsbands 17 an der Bezugsanordnung 7, wird das Einzugsband 17 mit den Schlaufen 19 durch das jeweilige Halteband 14 hindurchgeführt, sodass die Halteschlaufen 19 zwischen Schaumstoffschicht 9 und Halteband 14 hindurchgeführt sind und das Halteband 14 umschlingen, wie in Figur 2 gezeigt. Dabei ist zu beachten, dass die in Figur 2 gezeigte Naht 10, welche das Halteband 14 an der Einheit aus Sichtbezug 8 und Schaumstoffschicht 9 hält, selbstverständlich nicht die gezeigte Halteschlaufe 19 erfasst.

Figur 5 zeigt zwei Einzugsbänder 17, die an zwei der Haltebänder 14 auf die oben beschriebene Art und Weise befestigt wurden. Die Halteschlaufen 19 sind durch die Abschnitte zwischen den Befestigungsstellen 16 hindurch geführt, sodass sie das jeweilige Halteband 14 umschlingen. Die freien Enden 20 sind an dem Basisabschnitt 18 des jeweiligen Einzugsbands 17 befestigt, um die jeweilige Schlaufe zu schließen. Das Befestigen findet dabei insbesondere durch ein Vernähen der freien Enden 20 an dem Basisabschnitt 18 statt. Dadurch ist das jeweilige Einzugsband 17 fest am jeweiligen Halteband 14 arretiert.

Wie in Figur 2 gezeigt, weist das Sitzpolster 6 bevorzugt eine Vertiefung 22 auf, die im Bereich des jeweiligen Haltebands 14 liegt. Die Vertiefung 22 geht an ihrem Boden in eine Öffnung 23 über, welche durch das Sitzpolster 6 vollständig hindurchführt. Bei der Montage wird das Halteelement 21 beispielsweise durch die Öffnung 23 unter elastischer Verformung des Sitzpolsters 6 hindurchgeschoben, sodass die Bezugsanordnung 7 in die Vertiefung 22 bereichsweise hineingezogen wird, wodurch die Einwölbung 13 entsteht. An der Unterseite des Sitzpolsters 6 ist eine Fahrzeugsitzkomponente 24 angeordnet, die als Halteeinrichtung 25 ausgebildet und beispielsweise an dem Gestell 5 gehalten ist. Die Halteeinrichtung 25 weist einen Hintergriff 26 auf, hinter welchem das Halteelement 21 anordenbar ist. Der Hintergriff 26 wird dabei durch eine verjüngte Öffnung 27 einer Aufnahmevertiefung 28 der Halteeinrichtung 25 gebildet, in welcher das Halteelement 21 einliegt. Das Halteelement 21 kann dabei unter elastischer Verformung der Halteeinrichtung 25 in die Aufnahmevertiefung 28 eingebracht werden, oder alternativ seitlich beziehungsweise in die Papierebene hinein in die Aufnahmevertiefung 21 eingeschoben werden. Das Halteelement 21 ist dabei größer ausgebildet, als die lichte Weite der Öffnung 27, sodass das Halteelement 21 formschlüssig durch die Fahrzeugsitzkomponente 24 auf der der Bezugsanordnung 7 abgewandten Seite des Sitzpolsters 6 gehalten ist, wobei das Einzugsband 18 auf Zug vorgespannt ist und das Halteband 14 und damit die Bezugsanordnung 7 in die Vertiefung 22 zieht, wie zuvor bereits erwähnt.

Insgesamt wird dadurch erreicht, dass einerseits die Bezugsanordnung 7 sicher an dem Sitzpolster 6 befestigt ist, und dass andererseits, wenn gemäß der gestrichelt dargestellten Alternative gewünscht, eine Einwölbung 13 erzeugt ist, die sich von den Einwölbungen 11 der Rautennaht unterscheidet und insbesondere in Längserstreckung keine durchgehende Naht aufweist.

Während Figur 1 ein Ausführungsbeispiel zeigt, bei welchem lediglich eine derartige Befestigungseinrichtung 12 vorgesehen ist, ist es auch denkbar, die Fahrzeugsitzeinrichtung 1 mit zwei, drei oder mehr derartiger Befestigungseinrichtungen 12 zu versehen.

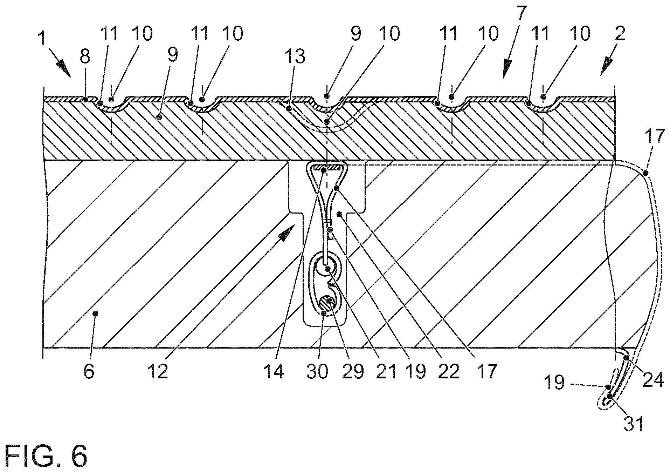

Während gemäß dem vorliegenden Ausführungsbeispiel vorgesehen ist, dass sich die Rautennaht und die Haltebänder der Befestigungseinrichtung(en) 12 nur jeweils über eine Sitzfläche der jeweiligen Bezugsanordnung 7 erstrecken, ist es auch denkbar, dass sich die Rautennaht und/oder die jeweilige Befestigungseinrichtung 12 über die gesamte Breite der jeweiligen Bezugsanordnung 7 beziehungsweise des jeweiligen Fahrzeugsitzes erstrecken. Figur 6 zeigt ein weiteres vorteilhaftes Ausführungsbeispiel, wobei aus den vorhergehenden Figuren bereits bekannte Elemente mit den gleichen Bezugszeichen versehen sind, und insofern auf die oben stehende Beschreibung verwiesen wird. Im Folgenden soll im Wesentlichen nur auf die Unterschiede eingegangen werden.

Im Unterschied zu dem vorhergehenden Ausführungsbeispiel ist die Befestigungseinrichtung 12 dazu ausgebildet, die Bezugsanordnung 7 mittels des Einzugsbands nicht an einer Fahrzeugsitzkomponente 24, sondern vielmehr an dem Sitzpolster 6 selbst zu befestigen. Dazu ist vorgesehen, dass in dem Sitzpolster 6 ein eingeschäumter Draht 29 angeordnet ist, der sich quer durch das Sitzpolster 6 erstreckt, also in Richtung des Haltebands 14 und des Einzugsbands 17. Der Draht 29 erstreckt sich dabei zumindest abschnittsweise durch die Vertiefung 22 beziehungsweise die Vertiefung 22 erstreckt sich über den Draht 29 hinaus, sodass dieser frei zugängig ist. Mittels einer Polsterklammer 30 sind der Draht 29 und das Halteelement 21 miteinander gekoppelt. Die Polsterklammer 30 umschlingt dazu sowohl das Halteelement 21 als auch den Draht 29. Die Polsterklammer 30 und das Einzugsband 17 sind, wie zuvor bereits beschrieben, zweckmäßigerweise derart ausgebildet, dass das Einzugsband 17 auf Zug vorgespannt ist, um die Bezugsanordnung 7 sicher an dem Sitzpolster 6 zu halten. Das alternative Ausführungsbeispiel hat den Vorteil, dass eine in Sitzpolster 6 und Bezugsanordnung 7 integrierte Lösung zur Befestigung der Bezugsanordnung 7 auf dem Sitzpolster 6 zu Verfügung gestellt wird. Auch hier ist es denkbar, die Befestigungseinrichtung 12 derart auszubilden, dass die Bezugsanordnung 7 derart in die Vertiefung 22 hineingezogen wird, dass sich die zuvor bereits genannte Einwölbung 13 ergibt.

Figur 6 zeigt außerdem eine weitere gestrichelt gezeichnete Alternative, gemäß welcher das Einzugsband 17 nicht in einer einzigen Stelle, sondern an zwei Stellen des Fahrzeugsitzes 2 befestigt ist. Dabei ist das Einzugsband 17 an einem Ende, wie zuvor beschrieben, an dem Draht 29 mittels der Polsterklammer 30 gehalten, während das freie Ende der jeweiligen Halteschlaufe 19 nicht zurück zu dem Ursprung der Halteschlaufen 19 geführt wird, sondern entlang der Oberfläche des Sitzpolsters 6 und an einer Stirnseite des Sitzpolsters 6 an diesem herunter zu der Fahrzeugsitzkomponente 24 oder einer anderen Fahrzeugsitzkomponente geführt ist, wo es festgemacht ist. Vorliegend umschlingt dazu das freie Ende der jeweiligen Halteschlaufe 19 einen Vorsprung 31 der Fahrzeugsitzkomponente, sodass eine Haftreibung beziehungsweise Selbsthemmung entsteht, und ist dort, beispielsweise durch einen Befestigungsbolzen, Nagel oder dergleichen festgemacht. Damit ist das Einzugsband 17 an zwei voneinander abweisenden Enden einerseits an dem Sitzpolster 6 und andererseits an der Fahrzeugsitzkomponente 24 befestigt, wodurch sich ein sicherer Halt der Bezugsanordnung 7 auf dem Sitzpolster 6 ergibt.

### Bezugszeichenliste

- 1: Fahrzeugsitzeinrichtung
- 2: Fahrzeugsitz
- 3: Rückenlehne
- 4: Sitzteil
- 5: Gestell
- 6: Sitzpolster
- 7: Bezugsanordnung
- 8: Sichtbezug
- 9: Schaumstoffschicht
- 10: Naht
- 11: Einwölbung
- 12: Befestigungseinrichtung
- 13: Einwölbung
- 14: Halteband
- 15: Naht
- 16: Befestigungsstelle
- 17: Einzugsband
- 18: Basisabschnitt
- 19: Halteschlaufe
- 20: Ende
- 21: Halteelement
- 22: Vertiefung
- 23: Öffnung
- 24: Fahrzeugsitzkomponente
- 25: Halteeinrichtung
- 26: Hintergriff
- 27: Öffnung
- 28: Aufnahmevertiefung
- 29: Draht
- 30: Polsterklammer
- 31: Vorsprung

## Patentansprüche

1. Fahrzeugsitzeinrichtung (1) für ein Kraftfahrzeug, mit einem Sitzpolster (6) und mit einer auf dem Sitzpolster (6) angeordneten Bezugsanordnung (7), die eine Schaumstoffschicht (9), einen auf einer ersten Seite der Schaumstoffschicht (9) angeordneten und durch mindestens eine Naht (10) an der Schaumstoffschicht (9) befestigten Sichtbezug (8) und zumindest ein an einer zweiten Seite der Schaumstoffschicht (9) befestigtes Einzugsband (17) aufweist, das in eine Vertiefung (22) des Sitzpolsters (6) eingezogen ist, um die Bezugsanordnung (7) an dem Sitzpolster (6) und/oder an einer das Sitzpolster (6) tragenden Fahrzeugsitzkomponente (23) zu befestigen, **dadurch gekennzeichnet, dass** an der zweiten Seite der Schaumstoffschicht (9) zumindest ein insbesondere flexibles Halteband (14) angeordnet und durch die zumindest eine Naht (10) an mehreren voneinander beabstandeten Befestigungsstellen (16) an der Bezugsanordnung (7) befestigt ist, und dass das Einzugsband (17) an dem Halteband (14) zwischen den Befestigungsstellen (16) befestigt ist.

2. Fahrzeugsitzeinrichtung nach Anspruch 1, **dadurch gekennzeichnet, dass** sich das jeweilige Halteband (14) über die gesamte Breite oder nahezu die gesamte Breite zumindest einer Sitzfläche des Sichtbezugs (8) geradlinig erstreckt.

3. Fahrzeugsitzeinrichtung nach einem der vorhergehenden Ansprüche, **dadurch gekennzeichnet, dass** das Einzugsband (17) in Richtung des Sitzpolsters (6) auf Zug vorgespannt oder vorspannbar ist.

4. Fahrzeugsitzeinrichtung nach einem der vorhergehenden Ansprüche, **dadurch gekennzeichnet, dass** die Naht (10) eine Rautennaht oder Karonaht ist.

5. Fahrzeugsitzeinrichtung nach einem der vorhergehenden Ansprüche, **dadurch gekennzeichnet, dass** das Halteband (14) gummielastisch ausgebildet ist.

6. Fahrzeugsitzeinrichtung nach einem der vorhergehenden Ansprüche, **dadurch gekennzeichnet, dass** das Einzugsband (17) mehrere Halteschlaufen (19) aufweist, die jeweils um das Halteband (14) zwischen zwei benachbarten Befestigungsstellen (16) geschlungen sind.

7. Fahrzeugsitzeinrichtung nach einem der vorhergehenden Ansprüche, **dadurch gekennzeichnet, dass** die Halteschlaufen (19) an einem ersten Ende jeweils einstückig mit dem Einzugsband (17) ausgebildet sind und an einem zweiten Ende an dem Einzugsband (17) oder an der jeweiligen Halteschlaufe festgemacht, insbesondere festgenäht sind.

8. Fahrzeugsitzeinrichtung nach einem der vorhergehenden Ansprüche, **dadurch gekennzeichnet, dass** die Halteschlaufen (19) an ihrem zweiten Ende T-förmig ausgebildet sind.

9. Fahrzeugsitzeinrichtung nach einem der vorhergehenden Ansprüche, **dadurch gekennzeichnet, dass** die Halteschlaufen (19) an dem ersten Ende jeweils einstückig mit dem Einzugsband ausgebildet sind und an ihrem zweiten Ende an dem Sitzpolster (6) oder der Fahrzeugsitzkomponente (23) befestigt sind.

10. Fahrzeugsitzeinrichtung nach einem der vorhergehenden Ansprüche, **dadurch gekennzeichnet, dass** das Einzugsband (17) an seinem von dem Halteband (14) abgewandten Ende an der Fahrzeugsitzkomponente (23) oder an dem Sitzpolster (6) befestigt ist.

11. Fahrzeugsitzeinrichtung nach einem der vorhergehenden Ansprüche, **dadurch gekennzeichnet, dass** das Einzugsband (17) an seinem von dem Halteband (14) abgewandten Ende zumindest ein im Vergleich zum Einzugsband (17) vergrößertes Halteelement (21) zur insbesondere formschlüssigen Befestigung an der Fahrzeugsitzkomponente (23) oder an dem Sitzpolster (6) aufweist.

## Claims

1. A vehicle seat device (1) for a motor vehicle, with a seat cushion (6) and with a cover arrangement (7), arranged on said seat cushion (6), having a foam layer (9), a visible cover (8) being arranged on a first side of the foam layer (9) and fastened by at least one seam (10) on the foam layer (9), and at least one pull-in strap (17) being fastened on a second side of the foam layer (9) and pulled into a recess (22) of the seat cushion (6) to fasten the cover arrangement (7) on the seat cushion (6) and/or on a vehicle seat component (23) supporting the seat cushion (6), **characterised in that** at least one particularly flexible support strap (14) is arranged on the second side of the foam layer (9) and fastened on the cover arrangement (7) by the at least one seam (10) at several fastening points (16) spaced apart from one another, and **in that** the pull-in strap (17) is fastened on the support strap (14) between the fastening points (16).

2. The vehicle seat device according to claim 1, **characterised in that** the respective support strap (14) extends in a straight line over the entire width or nearly the entire width of at least one seat surface of the visible cover (8).

3. The vehicle seat device according to one of the preceding claims, **characterised in that** the pull-in strap (17) is pre-stressed or can be pre-stressed under tension in the direction of the seat cushion (6) .

4. The vehicle seat device according to one of the preceding claims, **characterised in that** the seam (10) is a rhombus seam or diamond seam.

5. The vehicle seat device according to one of the preceding claims, **characterised in that** the support strap (14) is rubbery-elastic.

6. The vehicle seat device according to one of the preceding claims, **characterised in that** the pull-in strap (17) has several support loops (19) which are wrapped around the support strap (14), respectively, between two adjacent fastening points (16).

7. The vehicle seat device according to one of the preceding claims, **characterised in that** the support loops (19) are respectively formed integrally with the draw-in strap (17) at a first end, and at a second end fastened, particularly stitched, on/onto the pull-in strap (17) or on the respective support loop.

8. The vehicle seat device according to one of the preceding claims, **characterised in that** the support loops (19) are T-shaped at the second end thereof.

9. The vehicle seat device according to one of the preceding claims, **characterised in that** the support loops (19) are integrally formed, respectively, at the first end with the pull-in strap, and are fastened at its second end on the seat cushion (6) or the vehicle seat component (23).

10. The vehicle seat device according to one of the preceding claims, **characterised in that** the pull-in strap (17) is fastened at its end facing away from the support strap (14) on the vehicle seat component (23) or on the seat cushion (6).

11. The vehicle seat device according to one of the preceding claims, **characterised in that** the pull-in strap (17) has at its end facing away from the support strap (14) at least one support element (21) enlarged compared to the pull-in strap (17) for the particularly positive fastening on the vehicle seat component (23) or on the seat cushion (6).

## Revendications

1. Dispositif de siège de véhicule (1) pour un véhicule automobile, avec un coussin de siège (6) et avec un ensemble garniture (7) agencé sur le coussin de siège (6), qui comporte une couche de mousse (9), un revêtement visible (8) agencé sur un premier côté de la couche de mousse (9) et fixé avec au moins une couture (10) à la couche de mousse (9) et au moins une sangle d'introduction (17) fixée sur un deuxième côté de la couche de mousse (9), qui est introduite dans une cavité (22) du coussin de siège (6), pour fixer l'ensemble garniture (7) au coussin de siège (6) et/ou à un composant du siège de véhicule (23) supportant le coussin de siège (6), **caractérisé en ce que**, sur le deuxième côté de la couche de mousse (9), au moins une sangle de retenue flexible (14) en particulier est agencée et est fixée à l'ensemble garniture (7) par la au moins une couture (10) à plusieurs points de fixation (16) espacés les uns des autres et **en ce que** la sangle d'introduction (17) est fixée à la sangle de retenue (14) entre les points de fixation (16).

2. Dispositif de siège de véhicule selon la revendication 1, **caractérisé en ce que** la sangle de retenue respective (14) s'étend de manière rectiligne sur la largeur totale ou sur presque la largeur totale d'au moins une surface d'assise du revêtement visible (8) .

3. Dispositif de siège de véhicule selon l'une des revendications précédentes, **caractérisé en ce que** la sangle d'introduction (17) est précontrainte en traction ou peut être précontrainte en traction dans la direction du coussin de siège (6).

4. Dispositif de siège de véhicule selon l'une des revendications précédentes, **caractérisé en ce que** la couture (10) est une couture en forme de losange ou une couture en forme de carré.

5. Dispositif de siège de véhicule selon l'une des revendications précédentes, **caractérisé en ce que** la sangle de retenue (14) est réalisée en caoutchouc élastique.

6. Dispositif de siège de véhicule selon l'une des revendications précédentes, **caractérisé en ce que** la sangle d'introduction (17) comporte plusieurs boucles de maintien (19), qui sont enroulées respectivement autour de la sangle de retenue (14) entre deux points de fixation adjacents (16).

7. Dispositif de siège de véhicule selon l'une des revendications précédentes, **caractérisé en ce que** les boucles de maintien (19) sont formées à une première extrémité respectivement en une pièce avec la sangle d'introduction (17) et **en ce qu'**elles sont fixées, et en particulier cousues, à une deuxième extrémité à la sangle d'introduction (17) ou à la sangle de maintien respective.

8. Dispositif de siège de véhicule selon l'une des revendications précédentes, **caractérisé en ce que** les boucles de maintien (19) sont réalisées en forme de T à leur deuxième extrémité.

9. Dispositif de siège de véhicule selon l'une des revendications précédentes, **caractérisé en ce que** les boucles de maintien (19) sont formées à la première extrémité respectivement en une pièce avec la sangle d'introduction et **en ce qu'**elles sont fixées à leur deuxième extrémité au coussin de siège (6) ou au composant du siège de véhicule (23).

10. Dispositif de siège de véhicule selon l'une des revendications précédentes, **caractérisé en ce que** la sangle d'introduction (17) est fixée à son extrémité opposée de la sangle de retenue (14) au composant du siège de véhicule (23) ou au coussin de siège (6).

11. Dispositif de siège de véhicule selon l'une des revendications précédentes, **caractérisé en ce que** la sangle d'introduction (17) à son extrémité opposée de la sangle de retenue (14) comporte au moins un élément de retenue (21) agrandi par rapport à la sangle d'introduction (17) pour en particulier une fixation par liaison de forme au composant du siège de véhicule (23) ou au coussin de siège (6).
